# EUROPÄISCHE PATENTSCHRIFT

(11) **EP 3 470 645 B1**
(45) Veröffentlichungstag und Bekanntmachung des Hinweises auf die Patenterteilung: **03.03.2021**
(21) Anmeldenummer: 18197108.6
(22) Anmeldetag: 27.09.2018
(51) Int. Cl.: F01P 7/16, F02B 29/04

(54) **VERFAHREN ZUM BETREIBEN EINER BRENNKRAFTMASCHINE, BRENNKRAFTMASCHINE UND KRAFTFAHRZEUG**
COMBUSTION ENGINE, MOTOR VEHICLE AND METHOD FOR OPERATING A COMBUSTION ENGINE
PROCÉDÉ DE FONCTIONNEMENT D'UN MOTEUR À COMBUSTION INTERNE, MOTEUR À COMBUSTION INTERNE ET VÉHICULE AUTOMOBILE

(30) Priorität: 10.10.2017 DE 102017123468
(43) Veröffentlichungstag der Anmeldung: 17.04.2019
(73) Patentinhaber: VOLKSWAGEN AKTIENGESELLSCHAFT, 38440 Wolfsburg (DE)
(72) Erfinder: KIEL, Marco, 39116 Magdeburg (DE); HOFFMANN, Bodo, 38448 Wolfsburg (DE)
(74) Vertreter: Bungartz, Florian

(56) Entgegenhaltungen:
- DE-A1- 3 214 855
- DE-A1-102007 056 360
- JP-A- S6 285 115
- US-A- 6 055 947
- US-A1- 2016 131 017

## Beschreibung

Die Erfindung betrifft ein Verfahren zum Betreiben einer Brennkraftmaschine, eine zur Durchführung eines solchen Verfahrens geeignete Brennkraftmaschine sowie ein Kraftfahrzeug mit einer solchen Brennkraftmaschine.

Eine Brennkraftmaschine für ein Kraftfahrzeug weist in der Regel ein Kühlsystem auf, in dem ein Kühlmittel mittels einer oder mehrerer Kühlmittelpumpen in mindestens einem Kühlkreis gefördert wird und dabei Wärmeenergie von in den Kühlkreis integrierten Komponenten, u.a. einem Verbrennungsmotor, aufnimmt. Diese Wärmeenergie wird, sofern ein Betriebstemperaturbereich der Brennkraftmaschine bereits erreicht wurde, anschließend in einem Umgebungswärmetauscher, insbesondere dem sogenannten Hauptkühler, sowie zeitweise in einem Heizungswärmetauscher an die Umgebungsluft, im Fall des Heizungswärmetauschers an die zur Klimatisierung eines Innenraums des Kraftfahrzeugs vorgesehene Umgebungsluft, übertragen.

Eine Brennkraftmaschine für ein Kraftfahrzeug kann weiterhin eine Abgasrückführung aufweisen, mittels der ein Teil des von einem Verbrennungsmotor der Brennkraftmaschine erzeugten Abgases aus einem Abgasstrang der Brennkraftmaschine in einen Frischgasstrang der Brennkraftmaschine und über diesen in den Verbrennungsmotor zurückgeführt werden kann. Dadurch sollen insbesondere bestimmte Schadstoffemissionen im Betrieb der Brennkraftmaschine gering gehalten werden. Bekannt ist der Einsatz einer sogenannten Hochdruck-Abgasrückführung, bei der die dazugehörige Abgasrückführleitung stromauf einer in den Abgasstrang integrierten Turbine eines Abgasturboladers aus dem Abgasstrang abzweigt und stromab eines in den Frischgasstrang integrierten Verdichters des Abgasturboladers in den Frischgasstrang mündet. Weiterhin ist der Einsatz einer sogenannten Niederdruck-Abgasrückführung bekannt, bei der die dazugehörige Abgasrückführleitung stromab der Turbine eines Abgasturboladers aus dem Abgasstrang abzweigt und stromauf des Verdichters des Abgasturboladers in den Frischgasstrang mündet. Um eine zu hohe Temperatur des dem Verbrennungsmotor zugeführten Frischgases, bei dem es sich bei aktivierter Abgasrückführung um ein Luft-Abgas-Gemisch handelt, zu vermeiden, kann vorgesehen sein, dass in eine Abgasrückführleitung ein (AGR-)Kühler integriert ist, der als Wärmetauscher einen Übergang von Wärmeenergie von dem rückzuführenden Abgas auf ein den Wärmetauscher ebenfalls durchströmendes Kühlmittel ermöglicht. Üblicherweise ist ein derartiger AGR-Kühler in ein auch Kühlkanäle des Verbrennungsmotors umfassendes Kühlsystem der Brennkraftmaschine integriert.

Brennkraftmaschinen, die zum Antrieb von Kraftfahrzeugen vorgesehen sind, werden üblicherweise aufgeladen, um die spezifische Leistung zu erhöhen und den spezifischen Kraftstoffverbrauch zu senken. Weit verbreitet ist eine Aufladung von Brennkraftmaschinen mittels eines oder mehrerer Abgasturbolader. Diese umfassen eine Turbine mit einem Turbinenlaufrad, das von Abgas, das von einem Verbrennungsmotor der Brennkraftmaschine ausgestoßen wurde, angeströmt und dadurch drehend angetrieben wird. Das Turbinenlaufrad treibt über eine Welle ein Verdichterlaufrad eines Verdichters an, der in einen Frischgasstrang des Verbrennungsmotors integriert ist und dadurch das Frischgas verdichtet. Alternativ kann ein solcher Verdichter auch mittels eines anderen Antriebs, beispielsweise von dem Verbrennungsmotor selbst oder von einem elektrischen Antriebsmotor, angetrieben werden. Durch die Verdichtung kann u.a. die Menge des in die Brennräume des Verbrennungsmotors eingebrachten Frischgases und damit die Menge des in einem Arbeitsspiel in dem Brennraum umsetzbaren Kraftstoffs erhöht werden. Gleichzeitig wird jedoch durch die Verdichtung die Temperatur und damit das spezifische Volumen des verdichteten Frischgases erhöht, was der durch die Verdichtung beabsichtigten Erhöhung der Füllung der Brennräume entgegenwirkt. Um dies zu vermeiden, wird üblicherweise in den Frischgasstrang stromab des Verdichters ein Ladeluftkühler integriert, der eine zumindest teilweise Rückkühlung des durch die Verdichtung erwärmten Frischgases (Ladeluft) bewirkt. Ein solcher Ladeluftkühler kann auch in das Kühlsystem der Brennkraftmaschine integriert sein, so dass dessen Kühlwirkung auf einem Wärmeübergang von dem Frischgas auf den Ladeluftkühler durchströmendes Kühlmittel des Kühlsystems beruht.

Die DE 102 24 063 A1 offenbart ein Verfahren zur Wärmeregulierung einer Brennkraftmaschine mit einem Kühlmittelkreislauf und ansteuerbaren Einrichtungen zur Beeinflussung des Wärmehaushalts der Brennkraftmaschine, wobei eine Kühlmitteltemperatur und weitere Betriebsparameter der Brennkraftmaschine erfasst werden und die ansteuerbaren Einrichtungen in Abhängigkeit von der Kühlmitteltemperatur und der weiteren Betriebsparameter der Brennkraftmaschine angesteuert werden. Dabei erfolgt eine Regelung der Kühlmitteltemperatur und/oder der weiteren Betriebsparameter in der Weise, dass ein Ausgangswert zur Bestimmung einer Stellgröße mittels eines Grundkennfelds in Abhängigkeit von der Drehzahl und der Last der Brennkraftmaschine vorgegeben wird und dieser Ausgangswert mittels eines Reglers in Abhängigkeit von der Kühlmitteltemperatur und/oder der weiteren Betriebsparameter korrigiert wird.

Die DE 10 2008 064 231 A1 offenbart ein Kühlsystem für eine Brennkraftmaschine eines Kraftfahrzeugs, bei dem ein Ausgleichsbehälter derart ausgebildet ist, dass dieser eine relevante Kühlung des darin befindlichen Kühlmittels bewirkt.

Die DE 10 2010 003 622 A1 beschreibt Maßnahmen, um einen Katalysator einer Brennkraftmaschine eines Kraftfahrzeugs nach einem Kaltstart möglichst schnell auf eine vorgesehene Betriebstemperatur zu bringen sowie um die Betriebstemperatur auch während des Betriebs des Kraftfahrzeugs, beispielsweise während einer aktivierten automatischen Stoppfunktion für den Verbrennungsmotor der Brennkraftmaschine, aufrecht zu halten.

Die DE 10 2010 027 220 A1 offenbart ein Verfahren zum Starten einer Brennkraftmaschine, wobei eine Kurbelwelle der Brennkraftmaschine gedreht und zum Initiieren von Verbrennungsvorgängen in mindestens einem Arbeitszylinder der Brennkraftmaschine dem Arbeitszylinder Kraftstoff und über einen Verbrennungsluftkanal Verbrennungsluft zugeführt wird. Hierbei wird die Verbrennungsluft vor dem Initiieren der Verbrennungsvorgänge und vor dem Zuführen in den mindestens einen Arbeitszylinder von einem Verdichter in einem Kreislauf, der eine diesen Verdichter im Verbrennungsluftkanal überbrückende Bypassleitung umfasst, umgepumpt, wodurch die Verbrennungsluft vorgewärmt werden soll.

Die DE 11 2015 001 115 T5 beschreibt ein eine Wärmepumpe umfassendes Wärmemanagementsystem für ein Kraftfahrzeug.

Die DE 32 14 855 A1 offenbart ein Verfahren zur Temperaturregelung in einem Frischwasser-Kühlsystem einer aufgeladenen Brennkraftmaschine mit Ladeluftkühlung sowie ein entsprechendes Kühlsystem. Dabei soll es sich bei dem Verbrennungsmotor der Brennkraftmaschine insbesondere um einen mit Schweröl betriebenen Dieselmotor für ein Schiff, das unter arktischen Bedingungen verwendet werden soll, handeln. Im Rahmen der Temperaturregelung ist dabei vorgesehen, die Ansaugluft bei einem Betrieb des Verbrennungsmotors mit niedrigen Lasten vorzuwärmen und bei einem Betrieb mit hohen Lasten zu kühler.

Der Erfindung lag die Aufgabe zugrunde, bei einer Brennkraftmaschine für ein Kraftfahrzeug die die Leistungsentfaltung zu verbessern.

Diese Aufgabe wird durch ein Verfahren zum Betreiben einer Brennkraftmaschine gemäß dem Patentanspruch 1 gelöst. Eine zur automatisierten Durchführung eines solchen Verfahrens geeignete Brennkraftmaschine sowie ein Kraftfahrzeug mit einer solchen Brennkraftmaschine sind Gegenstände der Patentansprüche 4 und 6. Vorteilhafte Ausführungsformen des erfindungsgemäßen Verfahrens und bevorzugte Ausgestaltungsformen der erfindungsgemäßen Brennkraftmaschine und damit auch des erfindungsgemäßen Kraftfahrzeugs sind Gegenstände der weiteren Patentansprüche und/oder ergeben sich aus der nachfolgenden Beschreibung der Erfindung.

Erfindungsgemäß ist ein Verfahren zum Betreiben einer Brennkraftmaschine vorgesehen, wobei die (erfindungsgemäße) Brennkraftmaschine zumindest einen Verbrennungsmotor (insbesondere einen Dieselmotor oder einen Ottomotor oder eine Kombination daraus, d.h. z.B. einen Verbrennungsmotor mit homogener Kompressionszündung), einen Frischgasstrang, vorzugsweise einen Abgasstrang und ein einen Umgebungswärmetauscher umfassendes Kühlsystem aufweist. In den Frischgasstrang ist ein Verdichter, der insbesondere Teil eines Abgasturboladers sein kann, und, zwischen dem Verdichter und dem Verbrennungsmotor, ein Ladeluftkühler integriert. Der Ladeluftkühler ist zudem in das Kühlsystem beziehungsweise in zumindest einen Kühlkreis des Kühlsystems integriert. Das erfindungsgemäße Verfahren ist dadurch gekennzeichnet, dass bei einer Erhöhung der Lastanforderung (um beispielsweise mindestens 10% oder mindestens 20% oder mindestens 30% bezogen auf die Volllast), die an den Betrieb des Verbrennungsmotors gestellt wird, die Temperatur des in dem Kühlsystem strömenden und in den Ladeluftkühler eintretenden Kühlmittels abgesenkt wird. Das Bewirken der Absenkung der Temperatur des Kühlmittels wird erfindungsgemäß kurzfristig vor oder unmittelbar mit oder kurzfristig nach dem Erreichen einem der erhöhten Lastanforderung entsprechenden stationären Betrieb des Verbrennungsmotors wieder beendet. Dadurch kann insbesondere eine stark ausgeprägte Kondensation von Flüssigkeiten aus der Ladeluft im Ladeluftkühler aufgrund einer dauerhaften oder zumindest länger anhaltenden erhöhten Kühlleistung des Ladeluftkühlers vermieden werden.

Durch das Absenken der Temperatur des in den Ladeluftkühler eintretenden Kühlmittels wird die Kühlleistung des Ladeluftkühlers erhöht und damit auch ein Absinken der Temperatur des in den Verbrennungsmotor eintretenden Frischgases (Ladeluft) erreicht. Die damit verbundene Zunahme der Dichte der Ladeluft führt zu einer erhöhten Füllung der Brennräume, was sich, insbesondere in Verbindung mit der Verwendung eines Abgasturboladers, positiv auf den Ladedruckaufbau und damit auf das dynamische Betriebsverhalten des Verbrennungsmotors beziehungsweise auf die Anfahrts- und Elastizitätsleistung eines eine erfindungsgemäß betriebene Brennkraftmaschine aufweisenden (erfindungsgemäßen) Kraftfahrzeugs auswirkt.

Um eine Durchführung eines solchen erfindungsgemäßen Verfahrens zu ermöglichen, weist eine erfindungsgemäße Brennkraftmaschine zudem eine Steuerungsvorrichtung auf, die derart ausgebildet ist, dass diese ein erfindungsgemäßes Verfahren (automatisiert) ausführen kann.

Das Absenken der Temperatur des Kühlmittels kann vorzugsweise
- durch eine Erhöhung desjenigen Anteils des Kühlmittels, der über den Umgebungswärmetauscher geführt wird, im Vergleich zu demjenigen Anteil, der über einen den Umgebungswärmetauscher umgehenden Bypass (des Kühlsystems der erfindungsgemäßen Brennkraftmaschine) geführt wird, und/oder
- durch eine Erhöhung der Förderleistung eines dem Umgebungswärmetauscher zugeordneten Gebläses (der erfindungsgemäßen Brennkraftmaschine)
bewirkt werden. Folglich kann das Absenken der Temperatur des Kühlmittels ausschließlich durch die Verwendung von Komponenten des Kühlsystems, die dieses in der Regel ohnehin umfasst, erreicht werden.

Vorzugsweise kann vorgesehen sein, dass die Temperatur des in den Ladeluftkühler eintretenden Kühlmittels bis zu einem Bereich zwischen 15°C und 25°C abgesenkt wird, was sich als besonders vorteilhaft hinsichtlich der Erzielung einer möglichst optimalen Füllung der Brennräume des Verbrennungsmotors gezeigt hat. Im Gegensatz dazu kann vorgesehen sein, dass die Temperatur des in den Ladeluftkühler eintretenden Kühlmittels vor der Erhöhung der Lastanforderung in einem stationären Betriebszustand des Verbrennungsmotors in einem Bereich zwischen 35°C und 45°C gelegen hat.

Vorzugsweise kann für eine erfindungsgemäße Brennkraftmaschine eine Ausgestaltung des Kühlsystems derart vorgesehen sein, dass ein den Ladeluftkühler integrierender Kühlkreis von einem einen Kühlkanal des Verbrennungsmotors integrierenden Kühlkreis separiert ist, wobei der den Kühlkanal des Verbrennungsmotors integrierende Kühlkreis für einen höheren Betriebsbereich der Kühlmitteltemperatur ausgelegt ist als der den Ladeluftkühler integrierende Kühlkreis. Der erstgenannte Kühlkreis kann demnach insbesondere Bestandteil eines Hochtemperatur-Kühlsystems und der zweitgenannte Kühlkreis Bestandteil eines von dem Hochtemperatur-Kühlsystem separierten Niedertemperatur-Kühlsystems, die jeweils Abschnitte des (Gesamt-)Kühlsystems darstellen, sein. Als "separate" oder "separierte" Ausbildung der Kühlkreise beziehungsweise der (Teil-)Kühlsysteme wird dabei verstanden, dass diese keinen integralen Abschnitt, d.h. keinen Abschnitt, der sowohl Teil des einen Kühlkreises oder Kühlsystems als auch Teil des anderen Kühlkreises oder Kühlsystems ist, umfassen. Die separierten Kühlkreise oder Kühlsysteme können dabei jedoch mit einem gemeinsamen Ausgleichsbehälter, insbesondere über jeweils mindestens eine Ausgleichsleitung sowie jeweils eine Entlüftungsleitung, indirekt verbunden sein. Als "Ausgleichsbehälter" wird dabei ein Reservoir für das Kühlmittel des Kühlsystems verstanden, das dazu dient, insbesondere temperaturbedingte Ausdehnungen des Kühlmittels durch eine Veränderung des Füllstands des Kühlmittels in dem Ausgleichsbehälter auszugleichen. Dazu kann ein solcher Ausgleichsbehälter insbesondere teilweise mit dem Kühlmittel und teilweise mit einem Gas, insbesondere Luft, gefüllt sein. Eine dazugehörige Entlüftungsleitung kann vorzugsweise in einen Abschnitt des Ausgleichsbehälters münden, in dem das Gas vorhanden ist, während eine dazugehörige Ausgleichsleitung in einen das Kühlmittel aufnehmenden Abschnitt mündet, um ein Überströmen von Kühlmittel zwischen dem/den Kühlkreis(en) und dem Ausgleichsbehälter mit dem primären Ziel der Kompensation einer temperaturbedingten Ausdehnung des Kühlmittels, gegebenenfalls auch für ein erstmaliges oder im Rahmen von Wartungstätigkeiten vorgesehenes Befüllen des (Gesamt-)Kühlsystems oder zumindest der verbundenen Kühlkreise mit dem Kühlmittel, zu ermöglichen.

Ein erfindungsgemäßes Kraftfahrzeug umfasst zumindest eine erfindungsgemäße Brennkraftmaschine, die vorzugsweise zur Erzeugung einer Fahrantriebsleistung für das Kraftfahrzeug vorgesehen ist. Bei dem Kraftfahrzeug kann es sich insbesondere um ein radbasiertes Kraftfahrzeug (vorzugsweise PKW oder LKW) handeln.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die Erfindung wird nachfolgend anhand von in den Zeichnungen dargestellten Ausgestaltungsbeispielen näher erläutert. In den Zeichnungen zeigt:
- Fig. 1:: ein erfindungsgemäßes Kraftfahrzeug; und
- Fig. 2:: eine erfindungsgemäße Brennkraftmaschine schematisch in einem Schaltbild.

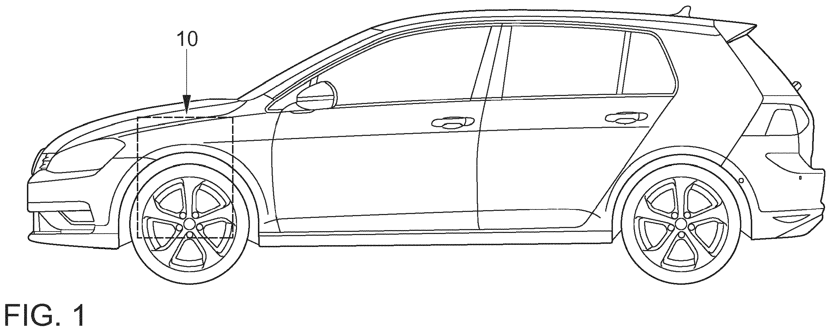

Die Fig. 1 zeigt ein erfindungsgemäßes Kraftfahrzeug mit einer erfindungsgemäßen Brennkraftmaschine 10.

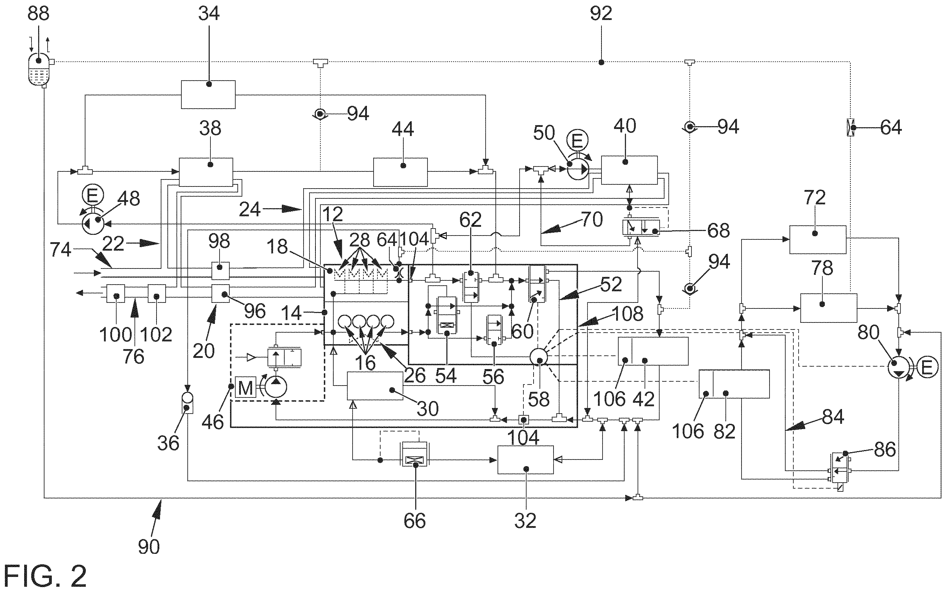

Eine solche erfindungsgemäße Brennkraftmaschine 10 kann gemäß der Fig. 2 einen Verbrennungsmotor 12 aufweisen, der insbesondere als nach dem Diesel-Prinzip arbeitender Hubkolben-Verbrennungsmotor ausgebildet sein kann und der ein Zylindergehäuse 14 mit darin ausgebildeten Zylindern 16 sowie einen Zylinderkopf 18 umfasst. Weiterhin weist die Brennkraftmaschine 10 gemäß der Fig. 2 noch ein Hauptkühlsystem und ein Nebenkühlsystem auf.

Das Hauptkühlsystem dient einer (direkten) Kühlung des Verbrennungsmotors 12, von Motoröl zur Schmierung des Verbrennungsmotors 12, von (Getriebe-)ÖI eines dem Verbrennungsmotor 12 zugeordneten (manuellen oder automatischen) Schaltgetriebes (nicht dargestellt), eines Abgasturboladers 20, insbesondere eines Lagerstuhls oder einer Abgasturbine 96 des Abgasturboladers 20, sowie von Abgas, das entweder über eine Abgasrückführleitung 22 einer Niederdruck-Abgasrückführung oder eine Abgasrückführleitung 24 einer Hochdruck-Abgasrückführung rückgeführt wird. Das Hauptkühlsystem umfasst hierzu Kühlkanäle 26, 28 des Zylindergehäuses 14 und des Zylinderkopfs 18, einen Motorölkühler 30, einen Getriebeölkühler 32, einen Kühler für den Abgasturbolader 20, konkret einen Kühlkanal der Abgasturbine 96 des Abgasturboladers (ATL-Kühler) 34, einen Kühler für ein (bzw. einen Kühlkanal in einem) Abgasrückführventil 36 sowie jeweils einen AGR-Kühler in der Abgasrückführleitung 22 der Niederdruck-Abgasrückführung (ND-AGR-Kühler 38) und der Abgasrückführleitung 24 der Hochdruck-Abgasrückführung (HD-AGR-Kühler 40). Weiterhin umfasst das Hauptkühlsystem einen Hauptkühler 42, drei Kühlmittelpumpen 46, 48, 50 sowie einen Heizungswärmetauscher 44. Der Hauptkühler 42 dient dazu, das diesen durchströmende Kühlmittel durch den Übergang von Wärmeenergie auf Umgebungsluft, die den Hauptkühler 42 ebenfalls durchströmt, rückzukühlen. Der Heizungswärmetauscher 44 dient dagegen dazu, bei Bedarf Umgebungsluft, die zur Klimatisierung eines Innenraums eines die Brennkraftmaschine 10 umfassenden Kraftfahrzeugs (gemäß beispielsweise der Fig. 1) vorgesehene Luft aufzuwärmen und dadurch zu temperieren. Von den drei Kühlmittelpumpen 46, 48, 50 des Hauptkühlsystems ist eine als Hauptkühlmittelpumpe 46 vorgesehen, die entweder elektromotorisch oder, vorzugsweise, direkt oder indirekt von einer Abtriebswelle (insbesondere einer Kurbelwelle; nicht dargestellt) des Verbrennungsmotors 12, d.h. mechanisch, angetrieben sein kann. Auch bei einem solchen mechanischen Antrieb der Hauptkühlmittelpumpe 46 kann diese hinsichtlich der spezifischen (d.h. jeweils auf die Antriebsdrehzahl bezogenen) Förderleistung steuerbar oder regelbar sowie zudem abschaltbar (d.h. dann trotz Drehantriebs ohne relevante Förderleistung erzeugend) ausgebildet sein. Dabei kann vorgesehen sein, dass im abgeschalteten Zustand der Hauptkühlmittelpumpe 46 deren Durchströmung verhindert oder ermöglicht ist. Die zwei weiteren (Zusatz-)Kühlmittelpumpen 48, 50 des Hauptkühlsystems sind dagegen elektromotorisch angetrieben.

Die verschiedenen Wärmetauschkomponenten sowie die Kühlmittelpumpen 46, 48, 50 sind in verschiedene Kühlkreise des Hauptkühlsystems integriert. Ein Hauptkühlkreis umfasst die Kühlkanäle 26, 28 des Zylinderkopfs 18 und des Zylindergehäuses 14, den Hauptkühler 42, einen den Hauptkühler 42 umgehenden Bypass 52 und die Hauptkühlmittelpumpe 46. Die Kühlkanäle 26, 28 des Zylinderkopfs 18 und des Zylindergehäuses 14 sind dabei parallel in den Hauptkühlkreis integriert. Mittels einer ersten Steuervorrichtung 54 in Form eines (selbsttätig regelnden) Thermostatventils (Öffnungstemperatur: 105 °C) sowie mittels einer zweiten Steuervorrichtung 56 in Form eines mittels einer Steuerungsvorrichtung 58 ansteuerbaren Steuerventils kann beeinflusst werden, ob und in welchem Ausmaß auch der Kühlkanal 26 des Zylindergehäuses 14 von dem Kühlmittel durchströmt wird, wenn der Kühlkanal 28 des Zylinderkopfs 18 durchströmt wird. Mittels einer dritten Steuervorrichtung 60, die ebenfalls in Form eines mittels der Steuerungsvorrichtung 58 ansteuerbaren Steuerventils ausgebildet ist, kann beeinflusst werden, ob und, wenn ja, in welchem Ausmaß Kühlmittel, das u.a. in dem Hauptkühlkreis strömt, über den Hauptkühler 42 oder den dazugehörigen Bypass 52 geführt wird. Die erste, zweite und dritte Steuervorrichtung 54, 56, 60 sowie eine vierte Steuervorrichtung 62 stellen jeweils Teil eines Kühlmittelverteilermoduls 108 dar.

Weiterhin ist ein erster Nebenkühlkreis vorgesehen, der eine Nebenstrecke umfasst, die unmittelbar stromab (bezogen auf eine vorgesehene Strömungsrichtung des Kühlmittels in dem Hauptkühlkreis) eines Auslasses des Kühlkanals 28 des Zylinderkopfs 18 aus einem Abschnitt des Hauptkühlkreises abgeht und stromauf der dritten Steuervorrichtung 60 wieder in einen Abschnitt des Hauptkühlkreises mündet. Der Abschnitt des Hauptkühlkreises zwischen dem Abzweig und der Mündung dieser Nebenstrecke des ersten Nebenkühlkreises ist mittels der vierten Steuervorrichtung 62, die in Form eines mittels der Steuerungsvorrichtung 58 ansteuerbaren Steuerventils ausgebildet ist, verschließbar, so dass bedarfsweise mittels dieser vierten Steuervorrichtung 62 eine Durchströmung dieses Abschnitts des Hauptkühlkreises (und damit des Hauptkühlkreises insgesamt) unterbunden werden kann. In den ersten Nebenkühlkreis ist eine erste (48) der Zusatzkühlmittelpumpen 48, 50 integriert. Stromab bezüglich dieser ersten Zusatzkühlmittelpumpe 48 teilt sich der erste Nebenkühlkreis in zwei parallel verlaufende Stränge auf, wobei in einen ersten dieser Stränge der ND-AGR-Kühler 38 und stromab davon der Heizungswärmetauscher 44 integriert sind, und in den zweiten Strang der ATL-Kühler 34 integriert ist. Die zwei Stränge der Nebenstrecke des ersten Nebenkühlkreises werden vor deren Mündung in den Hauptkühlkreis wieder zusammengeführt.

Das Hauptkühlsystem umfasst weiterhin einen zweiten Nebenkühlkreis. Eine Nebenstrecke des zweiten Nebenkühlkreises, in die der Kühler (Kühlkanal) für das Abgasrückführventil 36 integriert ist, geht in der Nähe des Auslasses des Kühlkanals 28 des Zylinderkopfs 18 ab, wobei in diesen Abzweig eine Drossel 64 zur Begrenzung der Menge des den zweiten Nebenkühlkreis durchströmenden Kühlmittels integriert ist. Die Nebenstrecke des zweiten Nebenkühlkreises mündet stromauf der Hauptkühlmittelpumpe 46 (sowie stromab des Hauptkühlers 42 und stromauf der Mündung des zu dem Hauptkühler 42 gehörenden Bypasses 52) in einen Abschnitt des Hauptkühlkreises.

Ein dritter Nebenkühlkreis umfasst eine Nebenstrecke, die im Bereich der Verzweigung zwischen den Kühlkanälen 26, 28 des Zylinderkopfs 18 und des Zylindergehäuses 14 abgeht und stromauf der Hauptkühlmittelpumpe 46 (sowie stromab des Hauptkühlers 42 und der Mündung des zu dem Hauptkühler 42 gehörenden Bypasses 52) wieder in einen Abschnitt des Hauptkühlkreises mündet. In diese Nebenstrecke ist der Motorölkühler 30 integriert.

Ein vierter Nebenkühlkreis umfasst eine Nebenstrecke, die aus der Nebenstrecke des dritten Nebenkühlkreises abgeht und die eine fünfte Steuervorrichtung 66 in Form eines Thermostatventils (Öffnungstemperatur: z.B. 75 °C) sowie den Getriebeölkühler 32 integriert. Die Nebenstrecke des vierten Nebenkühlkreises mündet ebenfalls stromauf der Hauptkühlmittelpumpe 46 (sowie stromab des Hauptkühlers 42 und stromauf der Mündung des zu dem Hauptkühler 42 gehörenden Bypasses 52) in einen Abschnitt des Hauptkühlkreises.

Ein fünfter Nebenkühlkreis des Hauptkühlsystems umfasst eine Nebenstrecke, die stromauf der ersten Zusatzkühlmittelpumpe 48 aus der Nebenstrecke des ersten Nebenkühlkreises abgeht und die die zweite Zusatzkühlmittelpumpe 50 sowie stromab davon den HD-AGR-Kühler 40 integriert. Stromab des HD-AGR-Kühlers 40 ist eine sechste Steuervorrichtung 68 in Form eines Thermostatventils (Umschalttemperatur z.B. zwischen 70°C und 80°C) angeordnet. Mittels dieser sechsten Steuervorrichtung kann Kühlmittel, das den HD-AGR-Kühler 40 durchströmt hat, temperaturabhängig auf entweder einen Endabschnitt der Nebenstrecke des AGR-Kühlkreises oder auf eine Kurzschlussleitung 70, die stromauf der zweiten Zusatzkühlmittelpumpe 50 in einen Anfangsabschnitt der Nebenstrecke des fünften Nebenkühlkreises mündet, aufgeteilt werden.

Das Nebenkühlsystem dient einer Kühlung des mittels eines Verdichters 98 des Abgasturboladers 20 aufgeladenen Frischgases (Ladeluft), das dem Verbrennungsmotor 12 über einen Frischgasstrang 74 der Brennkraftmaschine 10 zugeführt wird, sowie eines Dosierventils 72, mittels dessen ein Reduktionsmittel in Abgas, das einen Abgasstrang 76 der Brennkraftmaschine 10 durchströmt, eingebracht werden kann, um mittels selektiver katalytischer Reduktion eine Verringerung von Schadstoffen, insbesondere von Stickoxiden, des Abgases zu erreichen. Der zur Kühlung der Ladeluft vorgesehene Ladeluftkühler 78 einerseits und der zur Kühlung des Dosierventils 72 vorgesehene Kühlkanal andererseits sind in parallele Stränge eines Kühlkreises des Nebenkühlsystems integriert. Weiterhin ist in diesen Kühlkreis (in demjenigen Abschnitt, der nicht in die zwei Stränge aufgeteilt ist) eine elektromotorisch antreibbare Kühlmittelpumpe 80 sowie ein Zusatzkühler 82, der der Rückkühlung des den Kühlkreis des Nebenkühlsystems durchströmenden Kühlmittels durch einen Übergang von Wärmeenergie auf den Zusatzkühler 82 durchströmende Umgebungsluft dient, integriert. Der Zusatzkühler 82 ist mittels eines Bypasses 84 umgehbar, wobei eine Aufteilung des den Kühlkreis des Nebenkühlsystems durchströmenden Kühlmittels auf entweder den Zusatzkühler 82 oder den dazugehörigen Bypass 84 mittels einer siebten Steuervorrichtung 86, die als Thermostatventil oder als mittels einer Steuerungseinheit ansteuerbares Steuerventil ausgebildet sein kann, veränderbar ist.

Die Temperatur des Kühlmittels kann während eines regulären Betriebs der Brennkraftmaschine 10 in dem Hauptkühlsystem zumindest abschnittsweise deutlich höher als in dem Nebenkühlsystem sein, so dass ersteres auch als Hochtemperaturkühlsystem und letzteres als Niedertemperaturkühlsystem bezeichnet werden kann.

Das Kühlsystem umfasst weiterhin einen Ausgleichsbehälter 88, der teilweise mit dem Kühlmittel und teilweise mit Luft gefüllt ist. Über eine Verbindungsleitung 90, die aus einem das Kühlmittel aufnehmenden (unteren) Abschnitt des Ausgleichsbehälters 88 abgeht, ist der Ausgleichsbehälter 88 sowohl mit dem Hauptkühlkreis des Hauptkühlsystems als auch mit dem Kühlkreis des Nebenkühlsystems fluidleitend verbunden. Weiterhin verbinden Entlüftungsleitungen 92, unter Zwischenschaltung entweder einer oder mehrerer Rückschlagventile 94 oder einer Drossel 64, den HD-AGR-Kühler 40, den Hauptkühler 42, den Kühlkanal 28 des Zylinderkopfs 18 sowie den Ladeluftkühler 78 mit dem die Luft aufnehmenden (oberen) Abschnitt des Ausgleichsbehälters 88.

Das Hauptkühlsystem des Kühlsystems gemäß der Fig. 1 kann beispielsweise folgendermaßen betrieben werden.

Während einer Warmlaufphase, insbesondere nach einem Kaltstart des Verbrennungsmotors, wenn folglich das Kühlmittel im gesamten Kühlsystem eine relativ niedrige Temperatur aufweist, kann vorgesehen sein, die Hauptkühlmittelpumpe 46 nicht zu betreiben, wodurch oder wobei diese zudem abgeschaltet ist und folglich nicht durchströmt werden kann. Gleichzeitig kann während dieser Warmlaufphase die erste Zusatzkühlmittelpumpe 48 (mit variabler Förderleistung) betrieben werden, wodurch Kühlmittel (in Verbindung mit einer unterbrechenden Stellung der vierten Steuervorrichtung 62) in dem ersten Nebenkühlkreis gefördert wird. Das Kühlmittel durchströmt dabei den in die Nebenstrecke des ersten Nebenkühlkreises integrierten ATL-Kühler 34, den ND-AGR-Kühler 38 und den Heizungswärmetauscher 44. Weiterhin durchströmt dieses Kühlmittel (vollständig) den ebenfalls einen Abschnitt des ersten Nebenkühlkreises darstellenden Bypass 52 zu dem Hauptwasserkühler 42 (infolge einer entsprechenden Stellung der dritten Steuervorrichtung 60), weiterhin die Nebenstrecke des dritten Nebenkühlkreises (in einer Strömungsrichtung, die zu derjenigen in einem Regelbetrieb entgegengesetzt ist; vgl. Pfeilspitze ohne Füllung), wobei eine Durchströmung des Motorölkühlers 30 optional durch die Integration eines entsprechenden Bypasses (nicht dargestellt) in diese Nebenstrecke verhindert sein kann, sowie den Kühlkanal 28 des Zylinderkopfs18. Eine Durchströmung auch des Kühlkanals 26 des Zylindergehäuses 14, mit Ausnahme einer relativ kleinen Pilotströmung zur Temperierung der als Thermostatventil ausgebildeten ersten Steuervorrichtung 54, ist dabei in der Regel durch entsprechende Stellungen der ersten Steuervorrichtung 54 und der zweiten Steuervorrichtung 56 verhindert. In Ausnahmesituationen, insbesondere wenn trotz der Warmlaufphase ein Betrieb des Verbrennungsmotors 12 mit hohen Lasten, insbesondere Volllast, vorgesehen ist, kann aber auch vorgesehen sein, die zweite Steuervorrichtung 56 mittels der Steuerungsvorrichtung 58 in eine freigebende Stellung zu verstellen, um auch eine Durchströmung des Kühlkanals 26 des Zylindergehäuses 14 zu gewährleisten. In Abhängigkeit von der Temperatur des den ersten Nebenkühlkreis durchströmenden Kühlmittels wird während der Warmlaufphase mittels der fünften Steuervorrichtung 66 eine Durchströmung der Nebenstrecke des vierten Nebenkühlkreises und folglich des Getriebeölkühlers 32 zumindest anfangs verhindert.

Infolge der Durchströmung des ebenfalls einen Abschnitt des ersten Nebenkühlkreises darstellenden Kühlkanals 28 des Zylinderkopfs 18 wird auch der zweite Nebenkühlkreis mit dem darin integrierten Kühler (Kühlkanal) für das Abgasrückführventil 36 durchströmt.

Während der Warmlaufphase ist weiterhin vorgesehen, dass die sechste Steuervorrichtung 68 derart eingestellt ist, dass Kühlmittel mittels der hierzu betriebenen zweiten

Zusatzkühlmittelpumpe 50 in dem im Übrigen lediglich noch den HD-AGR-Kühler 40 sowie die Kurzschlussleitung 70 umfassenden Kurzschlusskreis gefördert wird.

Während eines Regelbetriebs der Brennkraftmaschine 10 wird die Hauptkühlmittelpumpe 46 (mit variabler spezifischer Förderleistung) betrieben und Kühlmittel zumindest zeitweise in sämtlichen der Kühlkreise des Hauptkühlsystems gefördert. Die zwei Zusatzkühlmittelpumpen 48, 50 des Hauptkühlsystems können dabei bedarfsweise zur Unterstützung der Hauptkühlmittelpumpe 46 ebenfalls betrieben werden. Für die zweite Zusatzkühlmittelpumpe 50 gilt dies jedoch erst, nachdem die sechste Steuervorrichtung 68 derart umgeschaltet hat, dass eine Strömung von Kühlmittel in dem fünften Kühlkreis zugelassen ist. Bevor dies vorgesehen ist, wird die zweite Zusatzkühlmittelpumpe 50 betrieben, um Kühlmittel (auch noch während eines Regelbetriebs der Brennkraftmaschine 10) innerhalb des Kurzschlusskreises zu fördern.

Während eines Regelbetriebs der Brennkraftmaschine 10 wird der Hauptkühlkreis permanent durchströmt, wobei stets eine Durchströmung des Kühlkanals 28 des Zylinderkopfs 18 vorgesehen ist, wohingegen eine Durchströmung auch des Kühlkanals 26 des Zylindergehäuses 14 (sofern nicht in Ausnahmesituationen die zweite Steuervorrichtung 56 in die freigebende Stellung verstellt ist) erst mittels der ersten Steuervorrichtung 54 freigegeben wird, wenn die Temperatur des Kühlmittels in dem Kühlkanal 26 des Zylindergehäuses 14 die Temperatur von ca. 105°C erreicht hat.

Mittels der dritten Steuervorrichtung 60 erfolgt während des Regelbetriebs der Brennkraftmaschine 10 weiterhin eine variable Aufteilung des den Hauptkühlkreis durchströmenden Kühlmittels auf entweder den Hauptkühler 42 oder den dazugehörigen Bypass 52, wodurch eine Solltemperatur für das den Kühlkanal 28 des Zylinderkopfs 18 verlassende Kühlmittel von ca. 90°C eingestellt werden kann.

Während des Regelbetriebs der Brennkraftmaschine 10 wird zudem der erste Nebenkühlkreis mit dem darin integrierten ATL-Kühler 34, dem ND-AGR-Kühler 38 und dem Heizungswärmetauscher 44 permanent durchströmt. Durch einen angepassten Betrieb der ersten Zusatzkühlmittelpumpe 48 kann dabei der Volumenstrom des Kühlmittels durch den Nebenstrang des ersten Nebenkühlkreises auch in Überlagerung zu der Förderleistung der Hauptkühlmittelpumpe 46 angepasst werden. Dies kann insbesondere zur Erzielung eines ausreichenden Wärmeübergangs in dem Heizungswärmetauscher 44 und damit einer ausreichenden Heizfunktionalität für die Innenraumheizung eines die Brennkraftmaschine 10 umfassenden Kraftfahrzeugs relevant sein.

Auch der zweite Nebenkühlkreis mit dem darin integrierten Kühler (Kühlkanal) für das Abgasrückführventil 36 und der dritte Nebenkühlkreis mit dem darin integrierten Motorölkühler 30 werden permanent durchströmt.

Für den vierten Nebenkühlkreis mit dem darin integrierten Getriebeölkühler 32 gilt dies dagegen nur dann, sofern die Temperatur des an der ebenfalls in die Nebenstrecke des vierten Nebenkühlkreises integrierten fünften Steuervorrichtung 66 anliegenden Kühlmittels mindestens 75°C beträgt, so dass dann die fünfte Steuervorrichtung 66 (temperaturabhängig variabel) eine Durchströmung auch des Getriebeölkühlers 32 zulässt. Auch hier kann in der verschließenden Stellung eine relativ kleine Pilotströmung zur Temperierung der als Thermostatventil ausgebildeten fünften Steuervorrichtung 66 vorgesehen sein.

Auch der fünfte Nebenkühlkreis wird nur dann durchströmt, wenn die Temperatur des zuvor in dem Kurzschlusskreis geförderten Kühlmittels mindestens die dazugehörige Grenztemperatur, die zwischen 70°C und 80°C liegen kann, erreicht hat. Sobald die sechste Steuervorrichtung 68 eine zumindest teilweise Durchströmung des fünften Kühlkreises freigegeben hat, wird der HD-AGR-Kühler 40 permanent mit Kühlmittel beaufschlagt, dessen Temperatur im Wesentlichen derjenigen entspricht, die im Auslass des Kühlkanals 28 des Zylinderkopfs 18 erreicht wurde und die insbesondere ca. 90°C betragen kann.

Für den Kühlkanal 26 des Zylindergehäuses 14, für die Nebenstrecke des vierten Nebenkühlkreises und damit den Getriebeölkühler 32 sowie für die Nebenstrecke des AGR-Kühlkreises gilt, dass die jeweilige Durchströmung mittels der entsprechenden Steuervorrichtungen 54, 66, 68 wieder unterbrochen werden kann, sofern die jeweils zugehörige Grenz- beziehungsweise Öffnungstemperatur unterschritten worden ist.

Eine Durchströmung des Kühlkreises des Nebenkühlsystems wird mittels der darin integrierten Kühlmittelpumpe 80 bedarfsgerecht und unabhängig von den Steuerungen/Regelungen des Hauptkühlsystems bewirkt.

Das Kühlsystem der Brennkraftmaschine 10 ermöglicht auch eine Nachheizfunktionalität bei nicht mehr betriebenem Verbrennungsmotor 12, indem Kühlmittel mittels der ersten Zusatzkühlmittelpumpe 48 in dem dann gegebenenfalls auch den Hauptkühler 42 umfassenden ersten Nebenkühlkreis gefördert wird, wodurch die noch in insbesondere dem Hauptkühler 42, dem Zylinderkopf 18 und dem ND-AGR-Kühler 38 enthaltene Wärmeenergie in dem Heizungswärmetauscher 44 zur Temperierung des Innenraums eines die Brennkraftmaschine 10 umfassenden Kraftfahrzeugs genutzt werden kann.

Weiterhin ermöglicht das Kühlsystem auch eine Nachkühlfunktionalität bei nicht mehr betriebenem, zuvor thermisch hoch belastetem Verbrennungsmotor 12, indem Kühlmittel mittels der ersten Zusatzkühlmittelpumpe 48 in dem dann auch den Hauptkühler 42 umfassenden ersten Nebenkühlkreis gefördert wird, wodurch die thermisch kritischen Komponenten des Kühlsystems, insbesondere der Zylinderkopf 18 und der Abgasturbolader 20 (mittels des ATL-Kühlers 34) und der ND-AGR-Kühler 38, nachgekühlt werden können.

Diese Nachkühlfunktionalität kann insbesondere in Verbindung mit einer automatischen Stoppfunktion für den Verbrennungsmotor 12 relevant sein. Durch die automatische Stoppfunktion wird der Verbrennungsmotor 12 im Betrieb der Brennkraftmaschine 10 beziehungsweise des die Brennkraftmaschine 10 umfassenden Kraftfahrzeugs automatisch abgeschaltet, sofern von diesem keine Antriebsleistung erzeugt werden soll. Um während einer aktivierten Stoppfunktion und folglich im Nichtbetrieb des Verbrennungsmotors 12 eine lokale thermische Überlastung des Hauptkühlsystems und der darin integrierten Komponenten, insbesondere des Verbrennungsmotors 12, des ND-AGR-Kühlers 38 und des ATL-Kühlers 34, die im besonderen Maße in dem vorausgegangenen Betrieb des Verbrennungsmotors 12 thermisch hoch belastet gewesen sein können, zu vermeiden, ist vorgesehen, Kühlmittel durch einen Betrieb der ersten Zusatzkühlmittelpumpe 48 in dem ersten Nebenkühlkreis zu fördern. Je nach Stellungen der Steuervorrichtungen 66, 68 und der Schaltstellung für die Durchlässigkeit der Hauptkühlmittelpumpe 46 können dabei auch der Getriebeölkühler 32, der Motorölkühler 30, die Hauptkühlmittelpumpe 46 sowie die Kühlkanäle 26 des Zylindergehäuses 14 durchströmt werden. Teilweise ist die Richtung der Durchströmung (vgl. Richtungspfeile ohne Füllung in der Fig. 2) dabei umgekehrt im Vergleich zu der Richtung der Durchströmung (vgl. Richtungspfeile mit Füllung in der Fig. 2) während eines Betriebs des Verbrennungsmotors 12. Während des Nachkühlens kann vorgesehen sein, das gesamte in dem ersten Nebenkühlkreis strömende Kühlmittel über den Hauptkühler 42 zu führen. Mittels der dritten Steuervorrichtung 60 kann jedoch auch ein variabler Anteil (bis hin zur Gesamtmenge) dieses Kühlmittel über den Bypass 52 geführt werden. Dadurch kann insbesondere ein zu starkes Auskühlen des Kühlmittels bei einem länger andauernden Nichtbetrieb des Verbrennungsmotors 12 infolge einer aktivierten Stoppfunktion vermieden werden.

Alternativ oder ergänzend ist vorgesehen, dass das Kühlmittel während eines Nichtbetriebs des Verbrennungsmotors 12 infolge einer aktivierten Stoppfunktion mittels der Kühlmittelpumpe 80 auch in dem Kühlkreis des Nebenkühlsystems gefördert wird, wodurch eine zu starke Erwärmung des Ladeluftkühlers 78 vermieden wird. Bei einer erneuten Inbetriebnahme des Verbrennungsmotors 12 infolge einer manuellen oder automatischen Deaktivierung der automatischen Stoppfunktion kann der Ladeluftkühler 78 dadurch wieder unmittelbar eine ausreichende Kühlleistung für die dem Verbrennungsmotor 12 zuzuführende Ladeluft aufbringen, so dass diese den Brennräumen des Verbrennungsmotors 12 in dem dafür vorgesehenen Temperaturbereich zugeführt wird. Mittels der siebten Steuervorrichtung 86 kann dabei variiert werden, welcher Anteil des in dem Kühlkreis des Nebenkühlsystems strömenden Kühlmittels über den Zusatzkühler 82 oder über den dazugehörigen Bypass 84 geführt wird, um einerseits eine ausreichende Kühlleistung für insbesondere den Ladeluftkühler 78 zu erreichen und andererseits ein zu starkes Auskühlen des Kühlmittels zu vermeiden.

Weiterhin ist für die Brennkraftmaschine 10 vorgesehen, dass bei bestimmten instationären Betriebszuständen des Verbrennungsmotors 12, konkret bei einer Erhöhung der Lastanforderung, die an den Betrieb des Verbrennungsmotors 12 gestellt wird, um mindestens 20% bezogen auf die Volllast, die Temperatur des in dem Kühlkreis des Nebenkühlsystems strömenden Kühlsystems um beispielsweise ca. 20°C im Vergleich zu dem vorausgegangenen stationären Betrieb abgesenkt wird, um mittels einer so realisierten Erhöhung der Kühlleistung des Ladeluftkühlers 78 eine verbesserte Füllung der Brennräume des Verbrennungsmotors 12 und daraus folgend einen verbesserten Laderdruckaufbau zu erzielen, wodurch das dynamische Betriebsverhalten des Verbrennungsmotors 12 verbessert wird.

Um die Temperatur des in dem Kühlkreis des Nebenkühlsystems strömenden Kühlmittels zu senken, wird, sofern dies möglich ist, ein erhöhter Anteil des an der siebten Steuervorrichtung 86 ankommenden Kühlmittels über den Zusatzkühler 82 geführt. Weiterhin kann vorgesehen sein, ein dem Zusatzkühler 82 zugeordnetes Gebläse 106 in Betrieb zu nehmen oder dessen Antriebsleistung zu erhöhen, wodurch die Kühlleistung des Zusatzkühlers 82 gesteigert werden kann.

In den Abgasstrang 76 der Brennkraftmaschine 10 ist weiterhin ein NOₓ-Speicherkatalysator 100 sowie ein Partikelfilter 102 integriert. Der NOx-Speicherkatalysator 100 dient dazu, im Abgas enthaltene Stickoxide zu speichern, wenn diese nicht in ausreichendem Maße durch das eingebrachte Reduktionsmittel in Kombination mit einem nicht dargestellten Reduktionsbeziehungsweise SCR-Katalysator reduziert werden können. Dies kann beispielsweise nach einem Kaltstart der Brennkraftmaschine 10 oder bei einem relativ lange andauernden Betrieb des Verbrennungsmotors 12 mit niedrigen Lasten und Drehzahlen der Fall sein, wodurch der SCR-Katalysator noch nicht oder nicht mehr eine für eine ausreichende Reduktion erforderliche Betriebstemperatur aufweist. Der Partikelfilter 102 dient dagegen dazu, Partikel aus dem Abgas herauszufiltern.

Sowohl für den NOₓ-Speicherkatalysator 100 als auch für den Partikelfilter 102 gilt, dass diese beim Erreichen einer definierten Beladungsgrenze regeneriert werden müssen, um deren Funktionsfähigkeit aufrecht zu erhalten. Bei einem NOₓ-Speicherkatalysator 100 kommt hinzu, dass dieser in regelmäßigen Abständen entschwefelt werden muss, weil der üblicherweise im Kraftstoff enthaltene Schwefel mit dem Speichermaterial des NOₓ-Speicherkatalysators 100 reagiert, wodurch die für die Speicherung der Stickoxide verfügbare Menge an Speichermaterial abnimmt. Zur Entschwefelung muss der NOₓ-Speicherkatalysator 100 unter anderem durch gezielte Maßnahmen auf eine Temperatur, die zwischen 600°C und 650°C liegt, aufgeheizt werden. Vergleichbare Temperaturen sind auch für eine Regeneration des Partikelfilters 102 erforderlich.

Das Aufheizen des NOₓ-Speicherkatalysators 100 und des Partikelfilters 102 auf die für eine Entschwefelung beziehungsweise Regeneration erforderlichen Temperaturen erfolgt durch eine entsprechende Erhöhung der Temperatur des Abgases, wofür verschiedene, grundsätzlich bekannte, insbesondere innermotorische Maßnahmen vorgesehen sind.

Während die Temperatur des Abgases in entsprechender Weise erhöht ist, um die Entschwefelung NOₓ-Speicherkatalysators 100 und die Regeneration des Partikelfilters 102 zu bewirken, wird eine im relevanten Ausmaß erhöhte thermische Leistung in den Verbrennungsmotor 12 (insbesondere direkt aufgrund der die Erhöhung der Temperatur des Abgases bewirkenden innermotorischen Maßnahmen) sowie in das gesamte Hauptkühlsystem oder zumindest in einen oder mehrere Abschnitte davon, nämlich einerseits über den Verbrennungsmotor 12 und andererseits über die beiden AGR-Kühler 38, 40, eingebracht.

Um eine lokale thermische Überlastung des Kühlsystems insbesondere im Bereich des Verbrennungsmotors 12 zu vermeiden (dabei soll insbesondere ein Sieden des Kühlmittels vermieden werden), ist vorgesehen, kurzzeitig vor sowie zumindest zeitweise während einer für die Entschwefelung des NOₓ-Speicherkatalysators 100 und/oder der Regeneration des Partikelfilters 102 vorgesehenen Erhöhung der Temperatur des Abgases eine Temperatur des Kühlmittels, konkret desjenigen Kühlmittels, das anschließend über die Hauptkühlmittelpumpe 46 in den Verbrennungsmotor 12 geleitet werden soll, abzusenken, um die erhöhte thermische Belastung des Verbrennungsmotors 12 sowie des Hauptkühlsystems infolge der Erhöhung der Temperatur des Abgases zu kompensieren. Die Temperatur des Kühlmittels wird dabei mittels eines Temperatursensors 104, der in den Austritt des Kühlkanals 28 des Zylinderkopfs 18 integriert ist, gemessen.

Um die Temperatur des in den Verbrennungsmotor 12 einströmenden Kühlmittels zu senken, wird, sofern dies möglich ist, ein erhöhter Anteil des an der dritten Steuervorrichtung 60 ankommenden Kühlmittels über den Hauptkühler 42 geführt. Weiterhin kann vorgesehen sein, ein dem Hauptkühler 42 zugeordnetes Gebläse 106 in Betrieb zu nehmen oder dessen Antriebsleistung zu erhöhen, wodurch die Kühlleistung des Hauptkühlers 42 gesteigert werden kann.

Kurzzeitig vor, zeitgleich oder kurzfristig nachdem die als Maßnahme für die Entschwefelung des NOₓ-Speicherkatalysators 100 und/oder für die Regeneration des Partikelfilters 102 vorgesehene Erhöhung der Temperatur des Abgases beendet wird, wird auch die Absenkung der Temperatur des Kühlmittels beendet beziehungsweise rückgängig gemacht, um eine zu starke Kühlung der in das Hauptkühlsystem integrierten Komponenten durch das Kühlmittel zu vermeiden.

Eine weitere Möglichkeit, eine lokale thermische Überlastung bis hin zu einem Sieden des Kühlmittels zu vermeiden, die grundsätzlich unabhängig von den übrigen hier beschriebenen Maßnahmen ist, mit diesem jedoch vorzugsweise kombiniert zur Anwendung kommt, liegt darin, im Betrieb des Kühlsystems ein definiertes Druckniveau für das Kühlmittel aufrecht zu halten, weil die Siedetemperatur druckabhängig ist und dabei mit zunehmendem Druck ansteigt. Bei dem hier vorgesehenen geschlossenen Kühlsystem, wie es grundsätzlich vielfach bei Brennkraftmaschinen für Kraftfahrzeuge zum Einsatz kommt, erhöht sich der Druck ausgehend von einem Kaltstart der Brennkraftmaschine 10 bis zum Erreichen des vorgesehenen Betriebstemperaturbereichs für das Kühlmittel, wobei durch das Vorsehen eines geschlossenen Ausgleichsbehälters 88 der Druckanstieg begrenzt, infolge der Komprimierung des darin befindlichen Gases jedoch nicht vollständig entlastet wird, wie dies bei einem offenen Kühlsystem beziehungsweise Ausgleichsbehälter 88 der Fall wäre. Weist das Kühlmittel beispielsweise kurz nach einem Kaltstart der Brennkraftmaschine 10 noch eine relativ niedrige Temperatur auf, ist auch dessen Druck im Kühlsystem noch relativ niedrig. Wird dann, beispielsweise durch eine sehr hohe Lastanforderung an den Verbrennungsmotor 12, lokal und insbesondere in dem Zylinderkopf 18 des Verbrennungsmotors 12 eine hohe thermische Leistung in das Kühlmittel eingetragen, besteht dort lokal die Gefahr des Siedens des Kühlmittels, wodurch dieses geschädigt werden kann. Um dies zu vermeiden, kann vorgesehen sein, dass in einem Zustand des Kühlsystems während eines Betriebs der Brennkraftmaschine 10 ein definiertes Druckniveau, das infolge einer noch zu geringen Temperatur des Kühlmittels noch nicht erreicht ist, aktiv durch eine oder mehrere geeignete Druckerzeugungsvorrichtungen zu erzeugen. Eine solche Druckerzeugungsvorrichtung kann dabei insbesondere in Abhängigkeit von dem Messsignal eines Drucksensors (nicht dargestellt), der vorzugsweise den Gasdruck in dem Ausgleichsbehälter 88 des Kühlsystems ermittelt, angesteuert werden. Eine solche aktive Beeinflussung des Drucks des Kühlmittels kann insbesondere durch eine entsprechende Ansteuerung einer oder mehrerer der Kühlmittelpumpen 46, 48, 50, 80 des Kühlsystems gegebenenfalls in Kombination mit ansteuerbaren Drosseln (nicht dargestellt) oder sonstigen aktiv veränderbaren Strömungswiderständen erreicht werden. Alternativ oder ergänzend kann vorzugsweise auch eine Druckerzeugungsvorrichtung (nicht dargestellt) vorgesehen sein, durch die der Druck des in dem Ausgleichsbehälter 88 enthaltenen Gases beeinflusst werden kann. Hierzu kann eine solche Druckerzeugungsvorrichtung eine Gasfördervorrichtung, insbesondere einen Verdichter, umfassen, durch den zusätzliches Gas mit dem Ziel der Erhöhung des Gasdrucks in den Ausgleichsbehälter einbringbar ist. Eine solche Druckerzeugungsvorrichtung kann weiterhin bevorzugt ein ansteuerbares Ventil aufweisen, wodurch der Gasdruck in dem Ausgleichsbehälter auch wieder gezielt reduziert werden kann. Alternativ oder ergänzend kann eine entsprechende Druckerzeugungsvorrichtung auch Mittel vorsehen, durch die das Volumen und damit der Druck des in dem Ausgleichsbehälter enthaltenen Gases beeinflusst werden kann. Derartige Mittel können beispielsweise eine das Gasvolumen zumindest teilweise begrenzende Wand, insbesondere in Form einer Membran, aufweisen, die mittels einer Betätigungsvorrichtung verschiebbar ist, um das Gasvolumen zu verändern.

### BEZUGSZEICHENLISTE

- 10: Brennkraftmaschine
- 12: Verbrennungsmotor
- 14: Zylindergehäuse
- 16: Zylinder
- 18: Zylinderkopf
- 20: Abgasturbolader
- 22: Abgasrückführleitung der Niederdruck-Abgasrückführung
- 24: Abgasrückführleitung der Hochdruck-Abgasrückführung
- 26: Kühlkanal des Zylindergehäuses
- 28: Kühlkanal des Zylinderkopfs
- 30: Motorölkühler
- 32: Getriebeölkühler
- 34: ATL-Kühler
- 36: Abgasrückführventil
- 38: ND-AGR-Kühler
- 40: HD-AGR-Kühler
- 42: Umgebungswärmetauscher/Hauptkühler
- 44: Heizungswärmetauscher
- 46: Hauptkühlmittelpumpe
- 48: erste Zusatzkühlmittelpumpe
- 50: zweite Zusatzkühlmittelpumpe
- 52: Bypass zum Hauptkühler
- 54: erste Steuervorrichtung
- 56: zweite Steuervorrichtung
- 58: Steuerungsvorrichtung
- 60: dritte Steuervorrichtung
- 62: vierte Steuervorrichtung
- 64: Drossel
- 66: fünfte Steuervorrichtung
- 68: sechste Steuervorrichtung
- 70: Kurzschlussleitung
- 72: Dosierventil
- 74: Frischgasstrang
- 76: Abgasstrang
- 78: Ladeluftkühler
- 80: Kühlmittelpumpe des Nebenkühlsystems
- 82: Umgebungswärmetauscher/Zusatzkühler
- 84: Bypass zum Zusatzkühler
- 86: siebte Steuervorrichtung
- 88: Ausgleichsbehälter
- 90: Verbindungsleitung
- 92: Entlüftungsleitung
- 94: Rückschlagventil
- 96: Abgasturbine des Abgasturboladers
- 98: Verdichter des Abgasturboladers
- 100: NOₓ-Speicherkatalysator
- 102: Partikelfilter
- 104: Temperatursensor
- 106: Gebläse
- 108: Kühlmittelverteilermodul

## Patentansprüche

1. Verfahren zum Betreiben einer Brennkraftmaschine (10) mit einem Verbrennungsmotor (12), einem Frischgasstrang (74), und einem einen Umgebungswärmetauscher (82) umfassenden Kühlsystem, wobei in den Frischgastrang (74) ein Verdichter (98) und zwischen dem Verdichter (98) und dem Verbrennungsmotor (12) ein Ladeluftkühler (78) integriert ist, der zudem in das Kühlsystem integriert ist, wobei bei einer Erhöhung der Lastanforderung, die an den Betrieb des Verbrennungsmotors (12) gestellt wird, die Temperatur des in dem Kühlsystem strömenden und in den Ladeluftkühler (78) eintretenden Kühlmittels abgesenkt wird, **dadurch gekennzeichnet, dass** das Bewirken der Absenkung der Temperatur des Kühlmittels vor oder mit oder nach dem Erreichen eines der erhöhten Lastanforderung entsprechenden stationären Betriebs des Verbrennungsmotors (12) wieder beendet wird.

2. Verfahren gemäß Anspruch 1, **dadurch gekennzeichnet, dass** das Absenken der Temperatur des Kühlmittels
- durch eine Erhöhung desjenigen Anteils des Kühlmittels, der über den Umgebungswärmetauscher (82) geführt wird, im Vergleich zu demjenigen Anteil, der über einen den Umgebungswärmetauscher (82) umgehenden Bypass (84) geführt wird, und/oder
- durch eine Erhöhung der Förderleistung eines dem Umgebungswärmetauscher (82) zugeordneten Gebläses (106)
bewirkt wird.

3. Verfahren gemäß Anspruch 1 oder 2, **dadurch gekennzeichnet, dass** die Temperatur des in den Ladeluftkühler (78) eintretenden Kühlmittels bis zu einem Wert zwischen 15°C und 25°C abgesenkt wird.

4. Brennkraftmaschine (10) mit einem Verbrennungsmotor (12), einem Frischgasstrang (74) und einem einen Umgebungswärmetauscher (82) umfassenden Kühlsystem, wobei in den Frischgastrang (74) ein Verdichter (98) und zwischen dem Verdichter (98) und dem Verbrennungsmotor (12) ein Ladeluftkühler (78) integriert ist, der zudem in das Kühlsystem integriert ist, **gekennzeichnet durch** eine Steuerungsvorrichtung (58), die derart ausgebildet ist, dass diese ein Verfahren gemäß einem der vorhergehenden Ansprüche ausführen kann.

5. Brennkraftmaschine (10) gemäß Anspruch 4, **dadurch gekennzeichnet, dass** ein den Ladeluftkühler (78) integrierender Kühlkreis des Kühlsystems von einem einen Kühlkanal (26, 28) des Verbrennungsmotors (12) integrierenden Kühlkreis des Kühlsystems separiert ist, wobei der den Kühlkanal (26, 28) des Verbrennungsmotors (12) integrierende Kühlkreis für einen höheren Betriebsbereich der Kühlmitteltemperatur ausgelegt ist als der den Ladeluftkühler (78) integrierende Kühlkreis.

6. Kraftfahrzeug mit einer Brennkraftmaschine (10) gemäß einem der Ansprüche 4 oder 5.

## Claims

1. Method for operating a combustion engine (10) comprising an internal combustion engine (12), a fresh gas tract (74), and a cooling system comprising an ambient heat exchanger (82), a compressor (98) being integrated into the fresh gas tract (74), and an intercooler (78), which is additionally integrated into the cooling system, being integrated into the fresh gas tract (74) between the compressor (98) and the internal combustion engine (12), the temperature of the coolant flowing in the cooling system and entering the intercooler (78) being lowered when the load requirement that is placed on the operation of the internal combustion engine (12) is increased, **characterized in that** the effectuation of the lowering of the temperature of the coolant is ended again prior to, or at the time of, or after reaching a steady-state operation of the internal combustion engine (12) corresponding to the increased load requirement.

2. Method according to Claim 1, **characterized in that** the lowering of the temperature of the coolant is effectuated
- by increasing the fraction of the coolant that is conducted via the ambient heat exchanger (82) in comparison with the fraction that is conducted via a bypass (84) bypassing the ambient heat exchanger (82), and/or
- by increasing the delivery rate of a blower (106) associated with the ambient heat exchanger (82).

3. Method according to Claim 1 or 2, **characterized in that** the temperature of the coolant entering the intercooler (78) is lowered to a value between 15°C and 25°C.

4. Combustion engine (10) comprising an internal combustion engine (12), a fresh gas tract (74), and a cooling system comprising an ambient heat exchanger (82), a compressor (98) being integrated into the fresh gas tract (74), and an intercooler (78), which is additionally integrated into the cooling system, being integrated into the fresh gas tract (74) between the compressor (98) and the internal combustion engine (12), **characterized by** a control device (58), which is designed so as to be able to carry out a method according to one of the preceding claims.

5. Combustion engine (10) according to Claim 4, **characterized in that** a cooling circuit of the cooling system integrating the intercooler (78) is separated from a cooling circuit of the cooling system integrating a cooling channel (26, 28) of the internal combustion engine (12), the cooling circuit integrating the cooling channel (26, 28) of the internal combustion engine (12) being designed for a higher operating range of the coolant temperature than the cooling circuit integrating the intercooler (78).

6. Motor vehicle comprising a combustion engine (10) according to one of Claims 4 or 5.

## Revendications

1. Procédé de fonctionnement d'un moteur à combustion interne (10) comprenant un moteur thermique (12), un conduit de gaz frais (74) et un système de refroidissement comprenant un échangeur de chaleur environnemental (82), dans le conduit de gaz frais (74), un compresseur (98) et, entre le compresseur (98) et le moteur thermique (12), un refroidisseur d'air de suralimentation (78) étant intégrés, le refroidisseur d'air de suralimentation étant en outre intégré dans le système de refroidissement, lors d'une augmentation de la demande de charge, qui est réglée lors du fonctionnement du moteur thermique (12), la température du liquide de refroidissement s'écoulant dans le système de refroidissement et entrant dans le refroidisseur d'air de suralimentation (78) étant diminuée, **caractérisé en ce que** l'action de la baisse de la température du liquide de refroidissement est de nouveau arrêtée avant ou pendant ou après l'obtention d'un fonctionnement du moteur thermique (12) stationnaire, correspondant à la demande de charge augmentée.

2. Procédé selon la revendication 1, **caractérisé en ce que** la baisse de la température du liquide de refroidissement est effectuée
- par une augmentation de la part du liquide de refroidissement qui est guidée à travers l'échangeur de chaleur environnemental (82), en comparaison avec la part qui est guidée à travers une dérivation (84) évitant l'échangeur de chaleur environnemental (82) et/ou
- par une augmentation du débit d'un ventilateur (106) associé à l'échangeur de chaleur environnemental (82)

3. Procédé selon la revendication 1 ou 2, **caractérisé en ce que** la température du liquide de refroidissement entrant dans le refroidisseur d'air de suralimentation (78) est abaissée jusqu'à une valeur comprise entre 15 °C et 25 °C.

4. Moteur à combustion interne (10) comprenant un moteur thermique (12), un conduit de gaz frais (74) et un système de refroidissement comprenant un échangeur de chaleur environnemental (82), dans le conduit de gaz frais (74), un compresseur (98) et, entre le compresseur (98) et le moteur thermique (12), un refroidisseur d'air de suralimentation (78) étant intégrés, le refroidisseur d'air de suralimentation étant en outre intégré dans le système de refroidissement, **caractérisé par** un dispositif de commande (58), qui est conçu pour pouvoir exécuter un procédé selon l'une quelconque des revendications précédentes.

5. Moteur à combustion interne (10) selon la revendication 4, **caractérisé en ce qu'un** circuit de refroidissement intégrant le refroidisseur d'air de suralimentation (78) du système de refroidissement est séparé d'un circuit de refroidissement du système de refroidissement intégrant un canal de refroidissement (26, 28) du moteur thermique (12), le circuit de refroidissement intégrant le canal de refroidissement (26, 28) du moteur thermique (12) étant conçu pour une plage de fonctionnement supérieure de température de liquide de refroidissement que le circuit de refroidissement intégrant le refroidisseur d'air de suralimentation (78).

6. Véhicule automobile comprenant un moteur à combustion interne (10) selon l'une quelconque des revendications 4 ou 5.
